# EUROPEAN PATENT APPLICATION

(11) **EP 1 102 185 A2**
(43) Date of publication of application: **23.05.2001**
(21) Application number: 00310019.5
(22) Date of filing: 10.11.2000
(51) Int. Cl.: G06F 17/60, G06F 17/40

(54) **Electric equipment servicing method and system**

(30) Priority: 16.11.1999 US 442047
(71) Applicant: GENERAL ELECTRIC COMPANY, Schenectady, NY 12345 (US)
(72) Inventor: Kliman, Gerald Burt, Niskayuna, New York 12309 (US); Koegl, Rudolph Alfred Albdert, Niskayuna, New York 12309 (US); Shah, Manoj Ramprasad, Latham, New York 12110 (US); Premerlani, William James, Scotia, New York 12302 (US)
(74) Representative: Goode, Ian Roy

(57) **Abstract**

An electric equipment (10) servicing method for providing information through a remote interface includes: receiving digital technical and payment data from the remote interface through a communication system (78); transferring the technical and payment data from the remote interface to a data processing system (11) including at least one database (22 or 24) for storage of the technical data; evaluating the data (20); transmitting digital information regarding the technical data to the remote interface; and using the payment data to obtain payment for the transmitted digital information. At least one screen accessible at the remote interface may include inquiry, order, and service agreement options.

## Description

The invention relates generally to electric equipment servicing and more particularly to remote service support for electrical machines and electronic drive systems.

Condition based maintenance (CBM) services generally are designed for installations such as steel mills, paper mills, and power plants where a large number of motors and/or large sized motors are used. Typical long term service agreements (LTSAs) provide for service either by a resident field engineer using a hand held data collector, a variety of instruments, or by continuous remote monitoring with installed sensors. The expense of long term service agreements is generally justifiable only for large installations. Installations having relatively fewer motors and/or smaller (in rating) motors still need occasional motor diagnostic assistance.

A September 1990 SAVO Electronics brochure entitled "MOST - Motor Operating Systems Technology" describes a process where a test service licensee (TSL) or a client licensee takes data at a client site using a data logger/tester and then downloads the data into a MOST computer for transmission to SAVO for analysis and preparation of report pages for the client. To use this system, a client either purchases a data logger/tester and MOST Computer or pays a TSL to come on site with a data/logger tester.

It would be useful to have a less expensive option for motor servicing than the present LTSAs and a more convenient option than the above-discussed SAVO Electronics process.

It would further be useful to provide potential customers of electric equipment products and/or services with on-line performance and design information applicable both for existing products and for desired specifications of products in the design phase.

According to one embodiment of the present invention, an electric equipment servicing method for providing information to customers through a remote interface includes: receiving digital technical and payment data from a customer at a remote interface; transferring the technical and payment data from the remote interface to a data processing system including at least one database for storage of the technical data; evaluating the data; transmitting digital information regarding the technical data to the remote interface; and using the payment data to obtain payment for the transmitted digital information.

According to another embodiment of the present invention, a method for selling technical equipment and service agreements over a network includes: providing at least one screen accessible at remote interfaces including inquiry, order, and service agreement options; and receiving inquiry, order, and service agreement requests in response to the inquiry, order and service agreement options and processing the inquiry, order, and service agreement requests using an integrated digital engineering system including equipment design tools, quality tools, and diagnostic tools.

The features of the invention believed to be novel are set forth with particularity in the appended claims. The invention itself, however, both as to organization and method of operation, together with further objects and advantages thereof, may best be understood by reference to the following description taken in conjunction with the accompanying drawings, where like numerals represent like components, in which:
**FIG. 1** is a block diagram of an electric equipment servicing system according to one embodiment of the present invention.
**FIG. 2** is a schematic diagram of a remote interface and screen for use with the electric equipment servicing system of FIG. 1.
**FIG. 3** is a block diagram of an electric equipment servicing system according to another embodiment of the present invention.
**FIG. 4** is a flowchart of a customer-based equipment servicing method according to one embodiment of the present invention.
**FIG. 5** is a flowchart of data request methods for use in the embodiment of FIG. 4.
**FIG. 6** is a flowchart of a local service provider-based equipment servicing method according to another embodiment of the present invention.
**FIG. 7** is a database chart illustrating different relationships that can be present within the embodiments of FIGs. 1-6.

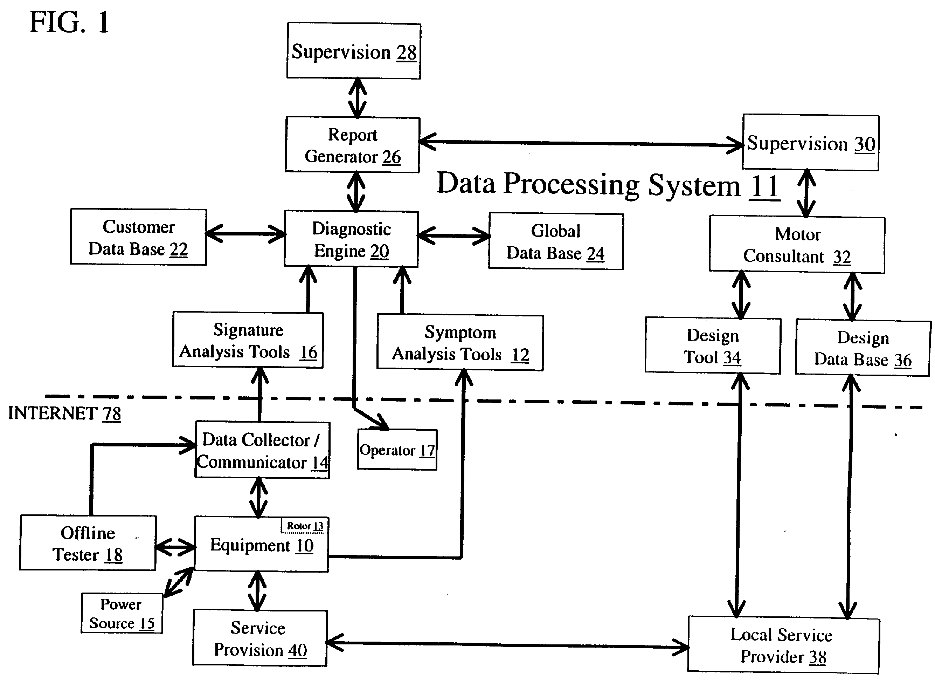

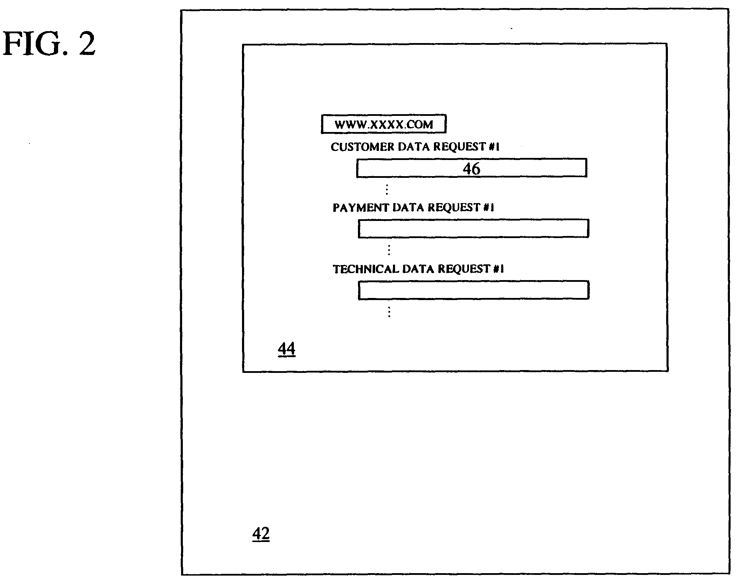

**FIG. 1** is a block diagram of an electric equipment 10 servicing system according to one embodiment of the present invention wherein information is provided to customers through a remote interface. **FIG. 2** is a schematic diagram of remote interface 42 and screen 44 for use with the electric equipment servicing system of FIG. 1.

Briefly, in one embodiment of the present invention, digital technical and payment data is automatically received from a customer at remote interface 42 by a data processing system 11 including at least one database 22 or 24 for storage of the technical data. The data processing system automatically evaluates the data. Digital information regarding the technical data is transmitted to the remote interface, and the payment data is used to obtain payment for the transmitted digital information. Using present technology, the remote interface and digital transmissions can be accomplished via web pages on the Internet 78. The present invention is intended to encompass other mediums than the Internet, however, particularly in the event that another form of standardized digital communication evolves.

Remote interface 44 comprises a remote interface of the customer or a remote interface of an authorized local service provider. Generally, electric equipment 10 comprises an electric machine or a drive system for an electric machine. The term is used broadly herein to include electric, electronic, and/or electrical equipment. The information that is transmitted to the remote interface may include a status of the electric equipment and/or at least one recommendation.

Evaluating the data includes processing the technical data in a diagnostic engine 20 while providing the technical data to, and receiving diagnostic data from, at least one database. In one embodiment, the at least one database includes a customer database 22 with data regarding the specific customer and a global database 24 with data gathered from a number of sources such as internal tests and other customers. Data of individual customers can be maintained privately and not shared with other customers by keeping the collective information in the global database for use by the diagnostic engine.

The resulting digital information can be transmitted directly from diagnostic engine 20 to the remote interface either automatically or after supervision 28 or 30. Most transactions handled by data processing system 11 will be handled by diagnostic engine 20 and data base 22 and/or 24. Occasionally a specific transaction will warrant further supervisory review either by another processor or by human intervention (shown in the graph as supervision 28 or 30). The diagnostic engine can be programmed to identify and flag such transactions. Report generator 26 can provide an digital or hard copy report for the customer or the supervision.

The technical data may include several categories of data and may be acquired by any of a number of techniques. Specific information about the electric equipment such as model numbers, design information, and dimensions may be (a) already present in the at least one database 22 or 24, (b) entered manually at the remote interface, or, in some systems, (c) downloaded from electronic files either embedded within or supplied with the electric equipment.

For basic service, technical data regarding symptoms of the electric equipment such as noise, vibration, and sparking, for example, will typically be entered manually. For analysis of symptoms, the data processing system includes symptom analysis tools 12.

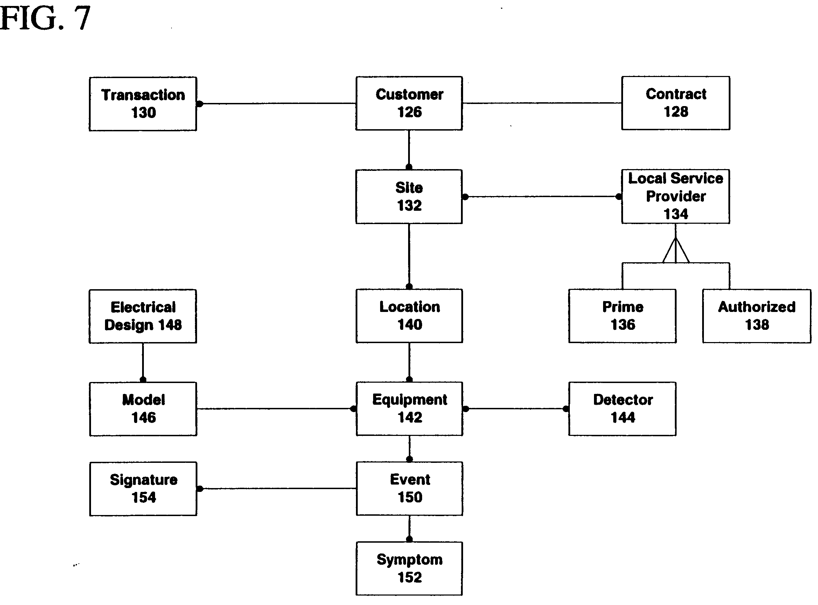

For more advanced service, detectable technical data regarding operating conditions of the motor is obtained via detectors 144 (FIG. 7) and the data processing system includes signature analysis tools 16. The term "detector" is meant to broadly encompass sensors, data processors that provide data-based calculations, and combinations of sensors and data processors. Technical data regarding detectable parameters of the motor can be entered either manually into the remote interface or transmitted automatically via a data collector 14. Data collector 14 may include communication capabilities for providing data directly to signature analysis tools 16. A signature, for example, may be a pattern or trend of temperature or vibration amplitude, or a certain feature in the spectrum of current, vibration, or flux, or a feature of a time waveform.

In one embodiment, the detectors of data collector 14 non-invasively collect real-time technical data. Examples of non-invasively detectable data include average current or power, vibration, noise, temperature, and external leakage flux. If desired, a customer could opt to alternatively use an invasive or built-in type of detector.

The data collector can be purchased by a customer or leased by a customer from a prime service provider or a local service provider at little or no cost. The data collector can be designed to collect raw data, conditioned data, and/or pre-processed data. Raw data is the data actually measured. Conditioned data includes data that undergoes conventional signal conditioning such as filtering and antialiasing. Pre-processed data includes data which has been processed to extract predetermined features.

Connection costs are minimized by processing the data in data collector/communicator 14 (which in this embodiment includes some or all of signature analysis tools 16) and transmitting predetermined features. Features are used by the diagnostic engine to determine the presence of incipient and actual faults in electric machinery. Several examples of such faults for motors are cracked rotor bars (for induction motors), turn-to-turn faults in windings, or deterioration of bearings. Several examples of patents which describe determination of predetermined features include commonly assigned Yazici et al., US Patent No. 5,726,905, Yazici et al., US Patent No. 5,742,522, Kliman et al., US Patent No. 5,345,158, and Premerlani et al., US Patent No. 5,786,708, for example. The diagnostic engine uses artificial intelligence tools such as neural networks, expert systems, fuzzy logic and/or Bayesian belief networks, for example, to process and interpret the previously extracted features in conjunction with the databases to perform the diagnoses.

Some technical data can best be detected by disconnecting the electric equipment from a power source 15. In one embodiment, the data collector includes communication capabilities and provides off-line stimulus (via an off-line tester 18 which may be integrated in or separate from the data collector) of the electric equipment while obtaining response measurements. For some measurements, a customer can be directed to assist the measurement process. For example, a customer can be directed to slowly turn a rotor 13 of the electric equipment or to turn a switch associated with equipment 10 on or off conditions.

In one embodiment, the technical information is provided to an authorized local service provider 38 and includes instructions for the authorized local service provider to use to improve (that is, repair and/or upgrade) the electric equipment. Depending on the level of authorization of the local service provider, the local service provider can be provided with access to an electric equipment design tool 34, design database 36, and/or a motor consultant 32. Motor consultant 32 may comprise a human expert or diagnostic engine similar to diagnostic engine 20. In this embodiment, payment can either be received from the customer or the local service provider.

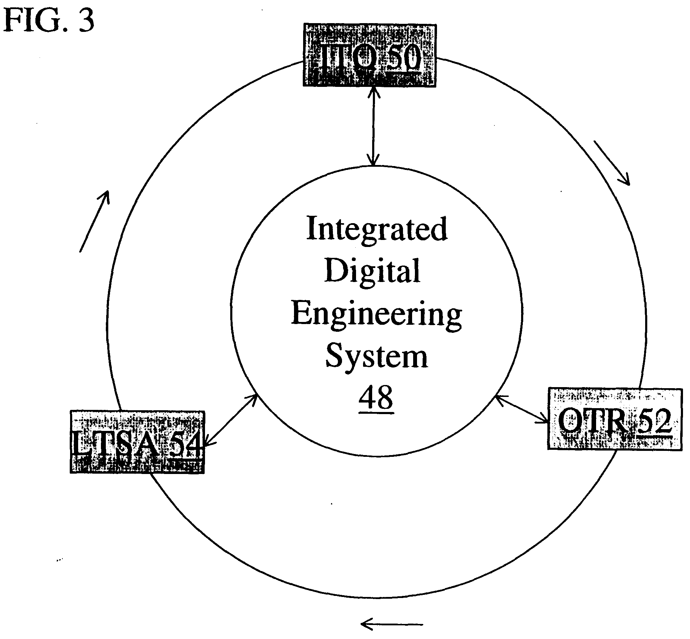

**FIG. 3** is a block diagram of an electric equipment servicing system according to another embodiment of the present invention. Briefly, in the embodiment of FIG. 3, a system for selling technical equipment and service agreements over a network includes at least one screen 44 (FIG. 2) accessible at remote interfaces 42 (FIG. 2) and including inquiry, order, and service agreement options 50, 52, and 54. This system can either be used in combination with or separately from the embodiment of FIG. 1.

FIG.3 further illustrates inquiry, order, and service agreement requests in response to the inquiry, order and service agreement options being received and processed using an integrated digital engineering system 48.

Processing of the inquiry requests may include transmitting further options and associated cost estimates and providing technical and payment data queries 46 on the at least one screen 44 of FIG. 2.

Processing of the order or service agreement requests may include transmitting further options and associated cost estimates and providing technical and payment data queries on the at least one screen. The customer will have a number of options to select from with respect to payment data such as credit card or bank account information via Internet or phone line and payment timing such as one payment or multiple payments, for example. Further options may include options specific to ordering and/or service agreements. After receiving the technical and payment data, the order request is authorized (typically with regard to the payment data), and technical data is evaluated. Digital information about the technical data is transmitted to the remote interface.

Processing of the service agreement requests may further include additional options. For example, a customer can choose between a "click" type agreement or a more conventional hard copy signature type agreement. Different lengths and levels of service can also be selected.

In one embodiment, integrated digital engineering system 48 comprises integrated equipment design tools, quality tools, and diagnostic tools. The design tools may comprise multi-disciplinary engineering tools. The quality tools may comprise six sigma tools such as MAIC (measure, analyze, improve, control), IDOV (identify, design, optimize, validate), DFSS (design for six sigma), DOE (design of experiment), and optimization tools, for example. These quality tools can be designed, for example, to use dimensional tolerances and material property variations for modeling to define performance characteristics and associated mean values and standard deviations. In this embodiment, the integrated engineering system may include the diagnostic engine with diagnostic engine tools such as feature extraction and diagnostic tools, apparatus selection tools, design tools, and ordering tools, for example. Diagnostic tools include tools such as cracked/broken rotor bar detectors, turn fault detectors, eccentricity detectors, faulty bearing detectors, vibration analyzers, and temperature trenders, for example, that have been developed to diagnose or monitor certain electrical equipment conditions. Integrated digital engineering system 48 may further include databases including historical data, industry standards, motor designs, and torque designs, for example. If tools or databases are not pre-compatible, integrating software can be used to provide compatibility.

In one embodiment, when a customer makes an inquiry, order, or a service request, the technical data transmitted by the customer includes sufficient information to create at least a partial blueprint for the electric equipment such that the integrated digital engineering system has a base line expectation of how the electric equipment works under normal operating conditions. Thus, the expected behavior and/or signature of electric equipment can be defined under normal and abnormal operating conditions for recognition purposes. Using the blueprint in combination with equipment design tools, quality tools, diagnostic tools, industry standards, and historical data, for example, enables the integrated digital engineering system to efficiently narrow down the potential causes of electric equipment malfunctions and to create a list of corresponding remedial actions to prevent further deterioration. As an alternative to having the customer input technical data to provide the blueprint, the electric equipment can be run with appropriate sensors in place such that the integrated digital engineering tool creates the blueprint.

The amount of data to be stored will depend on size, expense, and importance of the electric equipment. For example, small motors may be diagnosed using acquired and stored data applicable to an entire class of motors whereas a large power plant generator may be evaluated using measured data as well as design and diagnostic tools and historical data. Data gathering equipment may be integrated with or temporarily attached to the electric equipment and data monitoring may be continuous, periodic, random, or on an as needed basis.

Real time authorized access to critical design and performance information is important to technical and marketing personnel in development of new products and in development of service opportunities for existing products. For example, if a potential customer has a desired specification for a new electrical machine, it would be very convenient to go to a web page for information regarding whether the specification can be met and at what approximate cost. If a customer enters a relationship with a product or prime service provider on this basis, the relationship will likely continue due to the value of the database and tools in the integrated digital engineering system.

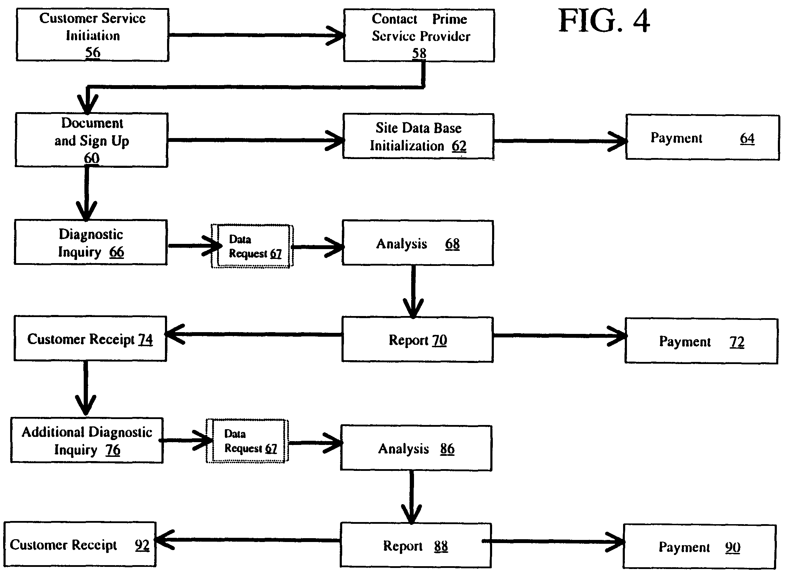

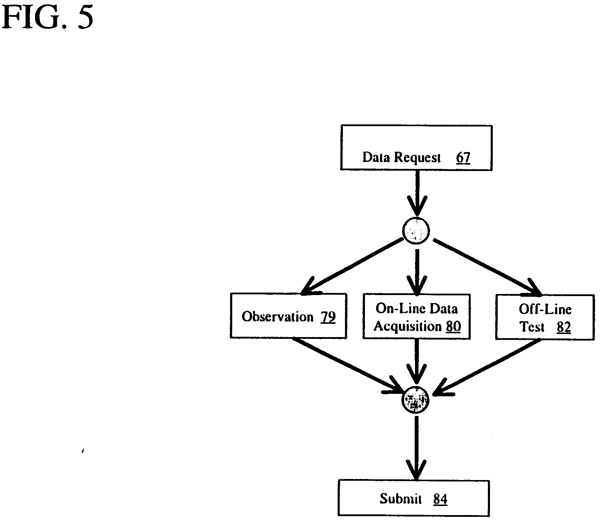

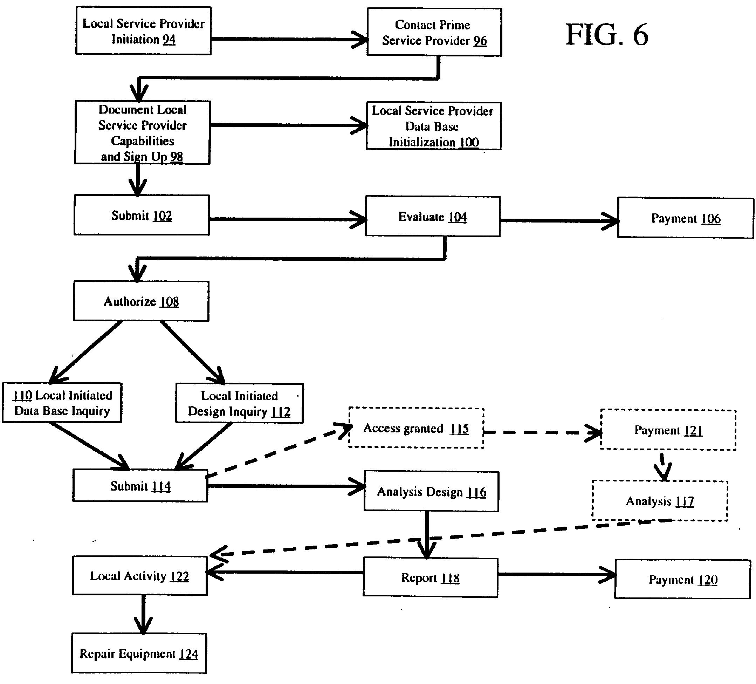

**FIG. 4** is a flowchart of a customer-based equipment servicing method according to one embodiment of the present invention, **FIG. 5** is a flowchart of data request methods for use in the embodiment of FIG. 4, and **FIG. 6** is a flowchart of a local service provider-based equipment servicing method according to another embodiment of the present invention.

By using the Internet or similar later-developed technologies, a wide variety of services can be tailored to the size, budget, and needs of large and small operations including electric equipment. As discussed above, larger operations typically contract for Long Term Service Agreements (LTSAs). Customers with smaller operations typically do not have in-house electric equipment experts and may not have LTSAs. For these customers, a product or service supplier can become accessible to the customer or to the customer's local service provider via a "service on demand" arrangement with payments made for each service. An arrangement in between the comprehensive and long term LTSA and a "service on demand" option can additionally be designed based on specific customer requirements. For example a shorter or less comprehensive service arrangement can be used via the Internet.

In the embodiment of FIG. 4, a customer initiates a service transaction at step 56, and a prime service provider is contacted at step 58. After the transaction is documented at step 60, a diagnostic inquiry is made at step 66. The steps in FIG. 4 are shown for purposes of example. In many applications, several steps can occur as a single step. For example, the customer can initiate service and provide diagnostic inquiry information in a single step.

If the customer is a new user, documentation step 60 includes a registration or "sign up" which is accompanied by database initialization at step 62 for the customer's electrical equipment and a payment transaction at step 64. Typically the initial information that the customer will provide can be used to inventory and label each unit of the customer's electrical equipment. Additionally, the customer can provide information from personal observations or measurements such as average operating current, average operating power, vibration levels, noise, or temperature via data request step 67.

At step 68 of FIG. 4, data processing system 11 (shown in FIG. 1) performs analysis of the inquiry and generates a digital or hard copy report at step 70 which is accompanied by a payment transaction at step 72 and a delivery to the customer at step 74. The report can include information about the probable condition of the electric equipment and/or recommended actions which may include, for example, any of generating more detailed data, continued monitoring, calling a local service provider, and sending the electrical equipment to a repair facility.

At step 76, a request for additional data is initiated if appropriate. The initiation can arise from either the data processing system (depending on the analysis) or the customer. For example, in some circumstances a customer may chose to go directly to step 76 and bypass the inquiry steps 66, 68, 70, and 72.

Each diagnostic inquiry (FIG. 5) 66 or 76 results in a data request 67. Each data request 67 gathers data in some manner; either by an operator's (shown as operator 17 in FIG. 1) observation 79 which provides a written data record, off-line tests 82 which can provide written and/or automated data records, or some on-line data acqusition 80 which can provide written and/or automated data records. On-line data acqusition 80 data can come from instruments or sensors permanently attached to the equipment 10; such as a protective motor relay, or temporarily attached instruments or sensors; such as clip-on CT's, or magnetic mount accelerometers, for example. Any or all of observation step 79, data acquisition step 80, or off-line test step 82 are then performed with resulting technical data aggregated and packaged for submission at step 84 and analyzed at steps 68 or 86.

A digital or hard copy report is generated at step 88 and accompanied by a payment transaction at step 90 and a delivery to the customer at step 92.

The embodiment of FIG. 6 illustrates a servicing method from the perspective of an authorized local service provider. To support service, particularly to customers with smaller operations, a prime service provider can establish, franchise, or contract with local service providers. Authorized local service providers can be given access to condition based maintenance data via the Internet. Further assistance from the prime service provider can include design assistance in machine repair (such as rewinding or bearing replacement, for example) and in accommodating modifications with access to design tools by local service providers on a demand/payment basis.

Steps 94 through 108 of FIG. 6 relate to the process for obtaining authorization as a local service provider. At steps 94 and 96, the local service provider initiates contact with the prime service provider. The local service provider documents its capabilities and registers at step 98, and the prime service provider enters the local service provider information in a database at step 100 and evaluates the step 102 submission at evaluation step 104. A payment transaction for the initialization and evaluation (optional) can occur at step 106 with authorization occurring at step 108.

When the local service provider is contacted by a customer, the local service provider can determine whether to initiate a database inquiry at step 110 and/or a design inquiry at step 112. Once the inquiry or inquiries are submitted at step 114, analysis can be performed at step 116 followed by a report at step 118, a payment transaction at step 120, and associated local service provider activities and repairs at steps 122 and 124. Information generated in the report may include information such as rewinding instructions (that is, patterns, numbers of turns, wire sizes, and insulation), recommended bearings, or recommended upgrades to meet objectives such as increased torque, lower temperatures, or to bring the equipment to manufacture's specification for example.

An alternate or additional path is to provide direct access to the database or design tools as shown in dashed lines by "access granted" step 115 with payment transaction at step 121 and the local service provider performing analysis at step 117. Access to design tool would be particularly useful if the local service provider was to service a motor not manufactured or sold by the prime service provider. The local service provider would provide core dimensions and information from the electrical equipment nameplate to the design tool to obtain rewinding or upgrade information.

**FIG. 7** is a database chart illustrating different relationships that can be present within the embodiments of FIGs. 1-6. One customer 126 can have a contract 128 with a prime service provider. Under the contract, the customer initiates one or more transactions 130. Each customer has one or more sites 132 and optionally have one or more authorized local service providers 134 being associated at each site 132. Each local service provider 134 can be affiliated with the prime service provider 136 or be a separate entity 138 and can serve one or more customers or sites.

Each site includes one or more locations 140 (such as buildings, for example) with each location including electrical equipment. Each unit of electrical equipment 142 has a model associated with it and one or more detectors 144 (temporary or integrated). Each detector 144 can sense parameters of one or more units of electrical equipment. An electrical design 148 can be used in one or more of the models 146.

One or more events 150 can occur in each unit of electrical equipment. Each event has one or more associated symptoms 152 and one or more associated signatures 154.

By storing detailed data regarding each signature and/or symptom as it is obtained as well as its associated event, equipment, model, design, detectors, building/location, etc., a complete database can be developed and used to enhance the tools and/or provide more accurate digital information back to the customer or local 5 service provider. For example, when data is used for extracting characteristic features as by clustering techniques as described in aforementioned Yazici et al., US Patent No. 5,742,522, each additional data point leads to a more robust database and data processing system.

For completeness, various aspects of the invention are set out in the following numbered clauses:-
1. An electric equipment (10) servicing method for providing information through a remote interface (42) comprising:
   automatically receiving digital technical and payment data from the remote interface;
   automatically transferring the technical and payment data from the remote interface to a data processing system (11) including at least one database (22 or 24) for storage of the technical data; automatically evaluating the data;
   transmitting digital information regarding the technical data to the remote interface; and
      using the payment data to obtain payment for the transmitted digital information.
2. The method of clause 1 further including, prior to receiving the technical and payment data, providing at least one screen (44) accessible at the remote interface, the at least one screen including inquiry, order, and service agreement options (50, 52, and 54).
3. The method of clause 2 further including receiving a request in response to the inquiry, order and service options and processing the request using an integrated digital engineering system (48).
4. The method of clause 3 further including, in response to the request, transmitting further options and associated cost estimates.
5. The method of clause 1 wherein the remote interface is a remote interface of a customer or a remote interface of an authorized local service provider.
6. The method of clause 1 wherein the electric equipment is an electric machine or a drive system.
7. The method of clause 1 wherein the information includes a status of the electric equipment.
8. The method of clause 7 wherein the information includes at least one recommendation.
9. The method of clause 1 further including manually entering at least some of the technical data.
10. The method of clause 9 wherein the at least some of the technical data includes symptoms (152) and the data processing system includes symptom analysis tools (12).
11. The method of clause 1 wherein evaluating the data includes processing the technical data in a diagnostic engine (20) while providing the technical data to and receiving diagnostic data from at least one database.
12. The method of clause 11 wherein the at least one database includes a customer database (22) and a global database (24).
13. The method of clause 12 wherein the at least one database includes technical data from each of a plurality of customers.
14. The method of clause 13 wherein the technical data includes event data, model data, and electrical design data.
15. The method of clause 1 further including, prior to transmitting the digital information, performing a supervisory review of the digital information.
16. The method of clause 1 further including detectors (144) for obtaining at least some of the technical data.
17. The method of clause 16 wherein the at least some of the data includes signatures (154) and wherein the data processing system includes signature analysis tools (16).
18. The method of clause 16 further including using a data collector (14) including the detectors to non-invasively collect real-time technical data.
19. The method of clause 1 further including using a data collector (14) to non-invasively collect real-time pre-processed data and to process the pre-processed data to provide at least some of the technical data.
20. The method of clause 19 further including disconnecting the electric equipment from a power source (15) and wherein the using the data collector occurs after the disconnecting the electric equipment and while providing an off-line stimulus to the electric equipment.
21. The method of clause 20 further including turning a rotor (13) of the electric equipment while using of the data collector.
22. The method of clause 1 wherein transmitting the information regarding the technical data includes transmitting instructions for an authorized local service provider (38) to use to improve the electric equipment.
23. The method of clause 22 further including providing the local service provider access to an electric equipment design tool (34) or design database (36).
24. The method of clause 23 further including providing the local service provider access to a motor consultant (32).
25. An electric equipment (10) servicing method for providing 25 information through a remote interface (42) comprising:
   automatically receiving digital technical and payment data from the remote interface by using a data collector (14) to non-invasively collect real-time pre-processed data and to process the pre-processed data to provide at least some of the technical data;
   automatically transferring the technical and payment data from the remote interface to a data processing system (11) including at least one database (22 or 24) for storage of the technical data, the at least one database including a customer database and a global database;
   automatically evaluating the data by processing the technical data in a diagnostic engine (20) while providing the technical data to and receiving diagnostic data from at least one database;
   transmitting digital information regarding the technical data to the remote interface; and
   using the payment data to obtain payment for the transmitted digital information.
26. The method of clause 25 wherein transmitting the information regarding the technical data includes transmitting instructions for an authorized local service provider (38) to use to improve the electric equipment.
27. A method for selling technical equipment and service agreements over a network comprising:
   providing at least one screen (44) accessible at remote interfaces (42), 20 the at least one screen including inquiry, order, and service agreement options (50, 52, and 54); and
   receiving inquiry, order, and service agreement requests in response to the inquiry, order and service agreement options and processing the inquiry, order, and service agreement requests using an integrated digital engineering system (48) including equipment design tools, quality tools, and diagnostic tools.
28. he method of clause 27 wherein the integrated digital engineering further includes at least one database.
29. he method of clause 27 further including, in response to the inquiry requests, transmitting further options and associated cost estimates and providing technical and payment data queries on the at least one screen.
30. he method of clause 29 wherein the further options include service agreement options.
31. he method of clause 27 further including, in response to the order or service agreement requests, transmitting further options and associated cost estimates and providing technical and payment data queries on the at least one screen, receiving the technical and payment data, authorizing the order request, and evaluating the technical data, and transmitting digital information about the technical data to the remote interface.
32. An electric equipment (10) servicing system comprising:
   a data processing system (11) for automatically receiving digital technical and payment data from a remote interface (42), the data processing system including at least one database (22 or 24) for storage of the technical data, and
   a diagnostic engine (20) for automatically evaluating the data, transmitting digital information regarding the technical data to the remote interface, and using the payment data to obtain payment for the transmitted digital information.
33. The system of clause 32 further including at least one screen (44) accessible at the remote interface, the at least one screen including inquiry, order, and service agreement options (50, 52, and 54).
34. The system of clause 32 wherein the remote interface is a remote interface of a customer or a remote interface of an authorized local service provider.
35. The system of clause 32 wherein the electric equipment is an electric machine or a drive system.
36. The system of clause 32 wherein the information includes a status of the electric equipment.
37. The system of clause 32 wherein the at least some of the technical data includes symptoms (152) and the data processing system includes symptom analysis tools (12).
38. The system of clause 32 wherein the at least one database includes a customer database (22) and a global database (24).
39. The system of clause 32 wherein the technical data includes event data, model data, and electrical design data.
40. The system of clause 32 further including detectors (144) for obtaining at least some of the technical data.
41. The system of clause 32 wherein the at least some of the data includes signatures (154) and wherein the data processing system includes signature analysis tools (16).
42. The system of clause 32 further including a data collector (14) adapted to non-invasively collect real-time technical data.
43. The system of clause 32 further including a data collector (14) adapted to non-invasively collect real-time pre-processed data and to process the pre-processed data to provide at least some of the technical data.
44. An electric equipment (10) servicing system comprising:
   a data processing system (11) for automatically receiving digital technical and payment data from a remote interface (42) of an authorized local service provider, the data processing system including at least one database (22 or 24) for storage of the technical data, and
   a diagnostic engine (20) for automatically evaluating the data, transmitting digital information regarding the technical data to the remote interface including instructions for an authorized local service provider (38) to use to improve the electric equipment, and using the payment data to obtain payment for the transmitted digital information.
45. A system for selling technical equipment and service agreements over a network comprising:
   at least one screen (44) accessible at remote interfaces (42) and including inquiry, order, and service agreement options (50, 52, and 54); and
   an integrated digital engineering system (48) including equipment design tools, quality tools, and diagnostic tools for receiving inquiry, order, and service agreement requests in response to the inquiry, order and service agreement options and for processing the inquiry, order, and service agreement requests.
46. The system of clause 45 wherein the integrated digital engineering system further includes at least one database.

## Claims

1. An electric equipment (10) servicing method for providing information through a remote interface (42) comprising:
automatically receiving digital technical and payment data from the remote interface;
automatically transferring the technical and payment data from the remote interface to a data processing system (11) including at least one database (22 or 24) for storage of the technical data; automatically evaluating the data;
transmitting digital information regarding the technical data to the remote interface; and
using the payment data to obtain payment for the transmitted digital information.

2. The method of claim 1 further including, prior to receiving the technical and payment data, providing at least one screen (44) accessible at the remote interface, the at least one screen including inquiry, order, and service agreement options (50, 52, and 54).

3. The method of claim 1 wherein evaluating the data includes processing the technical data in a diagnostic engine (20) while providing the technical data to and receiving diagnostic data from at least one database.

4. The method of claim 1 further including, prior to transmitting the digital information, performing a supervisory review of the digital information.

5. The method of claim 1 further including using a data collector (14) to non-invasively collect real-time pre-processed data and to process the pre-processed data to provide at least some of the technical data.

6. An electric equipment (10) servicing method for providing 25 information through a remote interface (42) comprising:
automatically receiving digital technical and payment data from the remote interface by using a data collector (14) to non-invasively collect real-time pre-processed data and to process the pre-processed data to provide at least some of the technical data;
automatically transferring the technical and payment data from the remote interface to a data processing system (11) including at least one database (22 or 24) for storage of the technical data, the at least one database including a customer database and a global database;
automatically evaluating the data by processing the technical data in a diagnostic engine (20) while providing the technical data to and receiving diagnostic data from at least one database;
transmitting digital information regarding the technical data to the remote interface; and
using the payment data to obtain payment for the transmitted digital information.

7. A method for selling technical equipment and service agreements over a network comprising:
providing at least one screen (44) accessible at remote interfaces (42), 20 the at least one screen including inquiry, order, and service agreement options (50, 52, and 54); and
receiving inquiry, order, and service agreement requests in response to the inquiry, order and service agreement options and processing the inquiry, order, and service agreement requests using an integrated digital engineering system (48) including equipment design tools, quality tools, and diagnostic tools.

8. An electric equipment (10) servicing system comprising:
a data processing system (11) for automatically receiving digital technical and payment data from a remote interface (42), the data processing system including at least one database (22 or 24) for storage of the technical data, and
a diagnostic engine (20) for automatically evaluating the data, transmitting digital information regarding the technical data to the remote interface, and using the payment data to obtain payment for the transmitted digital information.

9. An electric equipment (10) servicing system comprising:
a data processing system (11) for automatically receiving digital technical and payment data from a remote interface (42) of an authorized local service provider, the data processing system including at least one database (22 or 24) for storage of the technical data, and
a diagnostic engine (20) for automatically evaluating the data, transmitting digital information regarding the technical data to the remote interface including instructions for an authorized local service provider (38) to use to improve the electric equipment, and using the payment data to obtain payment for the transmitted digital information.

10. A system for selling technical equipment and service agreements over a network comprising:
at least one screen (44) accessible at remote interfaces (42) and including inquiry, order, and service agreement options (50, 52, and 54); and
an integrated digital engineering system (48) including equipment design tools, quality tools, and diagnostic tools for receiving inquiry, order, and service agreement requests in response to the inquiry, order and service agreement options and for processing the inquiry, order, and service agreement requests.
